# EUROPEAN PATENT APPLICATION

(11) **EP 4 586 366 A1**
(43) Date of publication of application: **16.07.2025**
(21) Application number: 25150871.9
(22) Date of filing: 09.01.2025
(51) Int. Cl.: H01M 10/613, H01M 10/625, H01M 10/6556, H01M 10/6568, H01M 10/6552, H01M 10/6557

(54) **BATTERY PACK COLD PLATE**

(30) Priority: 11.01.2024 US 202463620105 P
(71) Applicant: PACCAR INC, Bellevue, WA 98004 (US)
(72) Inventor: MANSOURI, Amir, Bellevue, 98004 (US); HANCOCK, Paul, Bellevue, 98004 (US); LEE, Chang-Wook, Bellevue, 98004 (US); BONSEN, Greg W., Bellevue, 98004 (US); JIA, Mingyang, Bellevue, 98004 (US)
(74) Representative: Gevers Patents

(57) **Abstract**

A battery pack includes battery cells arranged in an array to form a battery module layer. Multiple layers are vertically stacked with thermal management devices, such as active heat exchangers in the form of battery cold plates (120), above and below each layer to form a multi-layer battery stack that may be held in compression. The battery cold plates include liquid heat exchange medium passageways (124), the characteristics of which influence the heating and cooling capabilities of the cold plates. The battery cold plates, including at least arrangement and features of the passageways across the battery cold plate, are optimized to achieve desirable pressure drop and temperature distribution across the cold plates, among other benefits.

## Description

### BACKGROUND

### Technical Field

The present disclosure generally relates to battery packs, such as, for example, modular and scalable battery packs to meet energy requirements of different applications including battery packs that feature multi-layer battery stacks that effectively utilize space and increase energy density of the battery packs.

The present disclosure also generally relates to techniques for heating and cooling battery packs, including, but not limited to, heating and cooling form factors, systems, arrangements, and techniques and optimization of the same to provide effective heating and cooling functionality of the battery packs.

### Description of the Related Art

Electric vehicles have seen a rapid increase in popularity in recent years based on environmental concerns associated with internal combustion engines, and other factors. A known electric vehicle includes a battery to power an electric motor that is mechanically coupled to the wheels of the vehicle to generate vehicle movement via electric power provided by the battery pack. Electric vehicle range is limited by the capacity of the battery pack and the capacity of charging stations. This becomes particularly prominent for long-haul commercial vehicles.

Further, during cooling processes of a known battery, battery cells located on an upstream end of the flow of the heat exchange media can have a lower temperature than other battery cells in the battery pack, while batteries on the downstream end of the flow can have a higher temperature than other battery cells in the battery pack. This uneven temperature distribution across the battery cells can have a significant impact on battery cell capacity fade and impedance growth. The battery cells located on the downstream side are generally exposed to higher temperature and therefore the capacity of the battery cells fades more quickly. This creates a challenge for battery balancing and shortens battery life. Absent proper management of thermal conditions, the battery cells can also overheat and create a potentially dangerous thermal runaway event and/or battery fire.

Known battery pack cold plates have additional deficiencies. For example, flow of heat exchange media across the cold plate may result in areas that are too hot or too cold (i.e., the cold plate has an overall high deviation in temperature across the plate) which can impact battery performance. Current cold plate designs may not adequately consider pressure drop and other characteristics such that they remain inefficient and/or ineffective options for thermal management in battery packs relative at least to battery performance.

Accordingly, applicant believes it would be advantageous to have a cold plate for a battery pack that overcomes the above and other deficiencies and disadvantages of known thermal management systems for battery packs.

### BRIEF SUMMARY

The present disclosure is generally directed to battery packs and is particularly, but not exclusively, directed to battery packs and related battery technology for electric vehicles. The battery packs and related technology described herein may be particularly useful for implementation in commercial vehicles, including long-haul tractors, but the concepts discussed herein are not necessarily limited thereto and may be applied equally to other electric vehicles and electric vehicle batteries and related battery systems, as well as potentially other fields.

A battery pack includes a plurality of battery cells arranged in an array to form a battery module layer. Multiple battery module layers can be stacked in a vertical arrangement with thermal management devices such as active heat exchangers in the form of battery cold plates positioned above and/or below each layer to form a multi-layer battery stack. A battery pack frame includes frame elements that may support the battery cold plates and hold the battery cold plates in compression against the battery cells provided therebetween. The battery pack frame may also apply a compressive force to the multi-layer battery stack generally to hold the battery cells in place. The multi-layer battery stack and battery pack frame are surrounded by a battery enclosure that may be provided in a number of different form factors.

The battery cold plates in the battery pack enable heating and cooling of the battery cells via communication with a thermal management system that feeds a heat transfer medium through internal passages of the cold plates. According to the techniques of the present disclosure, characteristics of the channels or heat exchange media passageways across the cold plate are optimized to reduce temperature deviations across the cold plate and result in overall improved battery performance. Aspects of the disclosure also consider the pressure drop of fluid flow across the cold plate, which is related to the velocity or speed of fluid flow through the passageways and/or the cold plate. Flow that is too fast or too slow can result in inefficient thermal management and poor battery performance. Characteristics of the passageways themselves, including at least radius of curvature of bends or curves, length, width, and/or cross-sectional area of the passageways, among other factors, are also considered for optimization. Accordingly, the disclosure contemplates an arrangement and other characteristics of passageways for the flow of heat exchange media that optimize at least pressure drop and media velocity through the passageways, along with other characteristics of the cold plate generally, to provide improved thermal performance and advantageous reduction in or normalization of temperature deviation across the cold plate.

Additional features and benefits of the concepts of the disclosure are explained in more detail in the following description with reference to the accompanying drawings.

### BRIEF DESCRIPTION OF THE SEVERAL VIEWS OF THE DRAWINGS

The patent or application file contains at least one drawing executed in color. Copies of this patent or patent application publication with color drawing(s) will be provided by the Office upon request and payment of the necessary fee.

The present disclosure will be more fully understood by reference to the following figures, which are for illustrative purposes only. These non-limiting and non-exhaustive embodiments are described with reference to the following drawings, wherein like labels refer to like parts throughout the various views unless otherwise specified. The sizes and relative positions of elements in the drawings may not necessarily be drawn to scale in some figures. The figures do not describe every aspect of the teachings disclosed herein and do not limit the scope of the claims.
Figure 1 is a perspective view of an embodiment of a battery pack for a commercial vehicle with a battery pack enclosure omitted to reveal underlying details of the battery pack.
Figure 2A is a perspective view of a schematic battery module layer and associated battery pack cold plate of the battery pack of Figure 1.
Figure 2B is a plan view of a layout of passageways of the battery pack cold plate of Figure 2A.
Figures 3A-3E are heat maps for further embodiments of battery pack cold plates to illustrate variations in temperature distribution across the cold plate as a result of variations in the passageways.

### DETAILED DESCRIPTION

In the following description, certain specific details are set forth in order to provide a thorough understanding of various disclosed embodiments. However, embodiments may be practiced without one or more of these specific details, or with other methods, components, materials, etc. In other instances, well-known structures associated with battery technology have not been shown or described in detail to avoid unnecessarily obscuring descriptions of the embodiments.

Persons of ordinary skill in the relevant art will understand that the present disclosure is illustrative only and not in any way limiting. Other embodiments of the presently disclosed battery devices, systems and methods readily suggest themselves to such skilled persons having the assistance of this disclosure.

The present disclosure contemplates a battery pack cold plate that balances and optimizes several factors and/or characteristics of the cold plate to maintain an optimal operational temperature range for the battery cells of the battery pack and internal chemical reactions carried out thereby to receive, store, and/or output electricity. The techniques discussed herein also aim to reduce variations or deviations in temperature across the cold plate that can lead to suboptimal operating conditions for the battery pack. While the following disclosure will generally proceed to describe non-limiting examples of aspects and techniques that are particularly advantageous for battery packs for long-haul tractors and other commercial vehicles, the present disclosure is not limited thereto, and may be applied to any technology or field that benefits from optimal thermal management via at least a cold plate or other device for the flow of thermal media.

Unless the context clearly dictates otherwise, the term "tortuous" used herein is given its plain and ordinary meaning as "marked by repeated twists, bends, or turns." When "tortuous" is used to describe a fluid flow path (i.e., a "tortuous flow path"), the fluid flow path includes fluid flow in at least three different directions along the flow path.

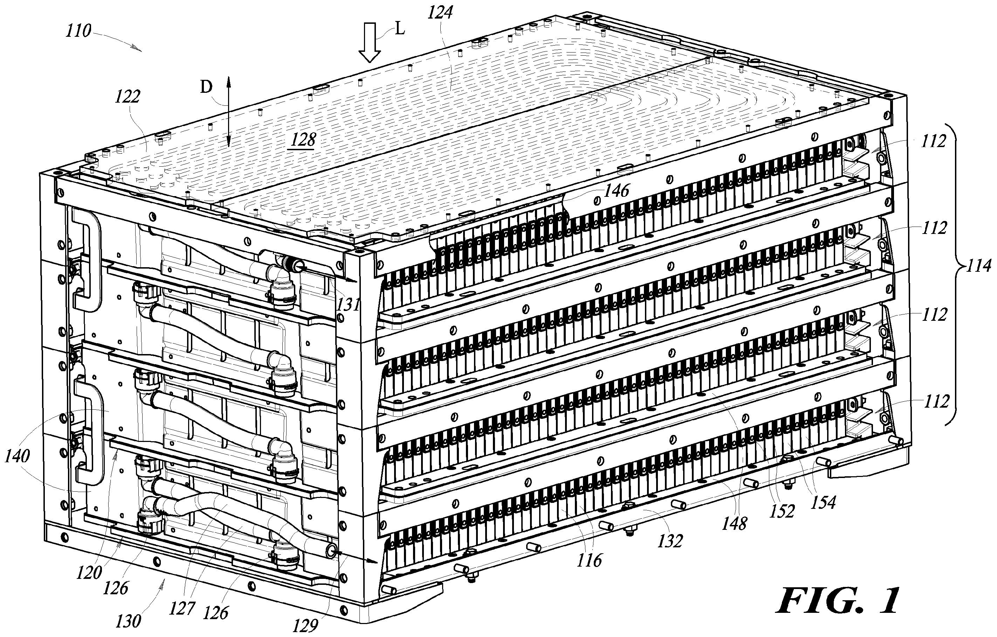

Beginning with Figure 1, illustrated therein is a battery pack 110 according to one or more example embodiments that is particularly well suited to serve as a common battery pack 110 that may be combined in parallel together with other like battery packs 110 to optimize vehicle power and vehicle range, as well as to be arranged in different arrangements on a vehicle to optimize weight distribution. As shown in Figure 1, the battery pack 110 may be provided in a form factor having a generally rectangular shape.

The battery pack 110 includes a plurality of battery module layers 112 stacked to form a multi-layer battery stack 114, with each battery module layer 112 including a plurality of battery cells 116 arranged in an array and connected in series with each other and all other battery cells 116 of the battery pack 110. A sufficient number of the battery cells 116 may be connected together in series to provide a target battery pack voltage, for example, in a range of between and including 600V and 1200V that is common to each of the common battery packs 110. The common battery packs 110 can then be connected in parallel with each other to increase vehicle power and vehicle range of a host commercial vehicle as desired or required.

To increase energy density, it is advantageous to provide the battery cells 116 of the battery pack 110 in the plurality of module layers 112. Unless the context and language clearly dictates otherwise, the term "energy density" should be construed broadly to include both volumetric energy density (i.e., Watt hours per Liter) and gravimetric energy density (i.e., Watt hours per kilogram). While the illustrated embodiment of Figure 1 shows four stacked battery module layers 112, it is appreciated that the number of battery module layers 112 may vary and include two, three, four, five or more battery module layers 112. Further, in some lower capacity applications, a single battery layer 112 may be provided. For a given vehicle, or for a fleet or a collection of vehicles, it is advantageous in some embodiments to provide a same number of battery module layers 112 in the battery packs 110 thereof such that the battery packs 112 have a common form factor for the particular vehicle, or for the fleet or the collection of vehicles.

With reference to Figure 1, the plurality of battery module layers 112 may be stacked in a vertical direction D to form the multi-layer battery stack 114 with each battery module layer 112 including a plurality of the battery cells 116 arranged in a linear array. Each battery module layer 112 may further include a thermal management device 120, such as an active heat exchanger (also referred to as a cold plate), that is in direct thermal engagement with the array of battery cells 116 to provide cooling or heating of the battery cells 116 in operation.

The battery pack 110 may further include a battery pack frame 130 including a plurality of frame members 132, wherein each battery module layer 112 is secured to a respective frame member 132 to support the battery module layers within the battery pack 110. In some advantageous embodiments, the frame members 132 may be arranged to apply a compressive load L on the battery module layers 112 to assist in maintaining the battery module layers 112 of the multi-layer battery stack 114 in thermal contact with each other. In this manner, cooling and heating of the battery cells 116 may be carried out more efficiently via the thermal management devices 120 of the battery pack 110. As an example, each frame member 132 may be provided in the form of a structural support frame at a periphery of the battery pack 110. The structural support frame may comprise, for example, angle iron components secured around a periphery of the battery pack 110 and the battery module layers 112 that may be secured directly or indirectly to each structural support frame. In some instances, the thermal management device 120 of each battery module layer 112 may be secured directly to a respective one of the structural support frames to support the array of battery cells 116 thereon. The structural support frames may be spaced such that as each battery module layer 112 is stacked on a prior layer and secured to the structural support frame (e.g., via a bolted arrangement), the thermal management device 120 of the overlying battery module layer 112 is pressed into contact with the battery cells 116 of the underlying battery module layer 112, or an intervening structure (e.g., a heat transfer pad), to maintain the battery module layers 112 of the multi-layer battery stack 114 in close thermal contact with each other.

With continued reference to Figure 1, each battery module layer 112 may further include one or more anchors 148 to assist in securing the array of battery cells 116 to the thermal management device 120 of the battery module layer 112. According to the illustrated embodiment, the anchors 148 are provided in the form of elongated bars or plates positioned adjacent to lower ends of the array of battery cells 116 and secured to the thermal management device 120 via bolted connections to hold the array of battery cells 116 in position on the thermal management device 120 and to assist in maintaining the battery cells 116 in contact with each other. For each battery module layer 112, all of the battery cells 116 of the battery module layer 112 may be compressed together. For example, for each battery module layer 112, all of the battery cells 16 of the battery module layer 112 may be compressed together with the aid of a compression band encircling the array of battery cells 116. In other instances, compression brackets 140 may be secured to opposing ends of the battery cells 116 with selectively adjustable tie rods or other devices for pressing the battery cells 116 together.

The battery cells 116 of each the battery module layer 112 are shown in Figure 1 in direct thermal engagement with the thermal management device 120 adjacent and overlying the battery cells 116 such that all of the battery cells 116 of the battery module layer 112 are positioned between two thermal management devices 120 above and below each respective battery module layer 112 to facilitate heat transfer on plural sides of the battery cells 116. Advantageously, the linear array of battery cells 116 of each battery module layer 112 are held in compression between two thermal management devices 120 of the multi-layer battery stack 114 to ensure close thermal contact among all of the battery cells 116 and facilitate efficient cooling of the battery stack 114 during operation, or alternatively, heating of the battery stack 114 during, for example, cold starts of the battery system. Close thermal contact in this context includes contact of the thermal management devices 120 directly with the battery cells 116 or contact via intermediate thermally conductive substrates or materials, such as a thermal paste or a thermal pad.

According to the illustrated embodiment of the battery pack 110, the thermal management device 120 is provided in the form of an active heat exchanger having at least one liquid heat exchange medium passageway 124 for circulating a liquid heat exchange medium for cooling or heating purposes, and more specifically may be referred to as a battery cold plate 120 that is configured to provide cooling or heating of the battery cells 116 in operation. The battery cold plate 120 of the illustrated embodiment comprises a generally planar manifold 122 and includes at least one heat transfer medium passageway 124 to facilitate the circulation of a heat transfer medium through the manifold 122 during operation to assist in drawing heat away from the battery cells 116 to cool the battery cells 116 or, alternatively, supplying heat to the battery cells 116 to heat the battery cells 116. As shown in Figure 1, one or more fittings 126 may be provided on the battery cold plate 120 to enable conduits 127 for the heat transfer medium to be attached to the cold plate 120 to enable fluid communication between the heat transfer medium passageway 124 of each cold plate 120 with each other and other components of a thermal management system, such as one or more chillers and one or more heaters to enable the battery cooling and heating functionality described herein.

The battery cold plate 120 may include a set of liquid heat exchange medium openings (concealed beneath and in fluid communication with the fittings 126) on a same end of the battery pack 110, which serve as an inlet and an outlet for the liquid heat exchange medium, among other possible configurations, including at least openings on opposite ends. As shown in Figure 1, the outlet of one of the battery cold plates 120 may be connected to the inlet of an adjacent one of the battery cold plates 120 to enable the liquid heat exchange medium to pass through each of the battery module layers 112 in a continuous path. The battery pack may also be configured such that the liquid heat exchange medium may flow in alternate directions along the continuous path to provide heating or cooling functionality to the multi-layer battery stack 114 in reversible directions. For example, with reference to Figure 1, in one configuration, the liquid heat exchange medium may move from a heater or chiller through a conduit to the battery cold plate 120 of a lower one of the battery module layers 112, as indicated by arrows 129, and then circulates through the battery cold plate 120 through one or more liquid heat exchange medium passageways 124 thereof, to be discharged and routed by another conduit 127 to the battery cold plate 120 of an adjacent battery module layer 112, wherein the liquid heat exchange medium then circulates through one or more liquid heat exchange medium passageways 124 of that battery cold plate 120 to be discharged and routed by yet another conduit 127 to the battery cold plate 120 of an adjacent battery module layer 112, and so on until exiting an upper most battery cold plate 120, as indicated by arrows 131. Conversely, as described elsewhere, flow may be reversed such that the liquid heat exchange medium enters the upper most battery module layer 112, indicated by arrows 131, and then circulates sequentially through each of the battery module layers 112 before being discharged from the multi-layer battery stack 114, as indicated by arrows 129. In this manner, all connections for the fittings 126 and conduits 127 for the liquid heat transfer medium may be provided on one end of the multi-layer battery stack 114, and, advantageously separated from electronics, which may be provided on an opposing end of the multi-layer battery stack 114. According to such an embodiment, there may be provided an electronics side of the pack 110 and a heat transfer medium routing and interface side of the pack 110. In other embodiments, connections and interfaces for electronics and connections and interfaces for the liquid heat transfer medium may be intermixed within the pack 110. In addition, the heat transfer medium may be routed through the battery module layers 112 in a different order or manner than sequentially. For example, the heat transfer medium may be routed through one or more battery module layers 112 in parallel.

Notably, according to the illustrated embodiment of the battery pack 110 of Figure 1, each of the battery cells 116 include one or more electrode terminals 152 on an end face 154 of the battery cell 116 which are oriented normal to a direction in which the battery cells 116 are aligned in the array and parallel to major surfaces 128 of the battery cold plate 120 that are themselves oriented normal to the stacking direction D of the multi-layer battery stack 114. The major surfaces 128 of the battery cold plates 120 are also perpendicular to a plane of the electrodes 152 in the battery cells 116. In this configuration, electrical bus bar connections for the battery cell 116 may be maintained on a side of the battery stack 114 and enable upper and lower surfaces of the array of battery cells 116 to present uninterrupted mating surfaces for interfacing with the overlying and underlying cold plates 120, respectively, and provide a form factor that is particularly well suited for cooling and heating of the battery cells 116.

Alternatively, each of the battery cells 116 may include one or more electrode terminals on an upper face of the battery cell 116, which are oriented parallel to the stacking direction D₂ of the multi-layer battery stack 114. In this regard, the major surfaces 128 of the battery cold plates 120 may be parallel to a plane of the electrodes 152 in the battery cells 116. In this configuration, electrical bus bar connections for the battery cell 116 may be maintained along the upper surface of each battery module layer 112.

Although the embodiment shown in Figure 1 depicts the use of a plurality of conduits 127 and fittings 126 for routing heat transfer medium between layers of the battery pack 110, it is appreciated that other means of routing the heat transfer medium throughout the battery pack may be provided. For example, according to one variant, the conduits 127 and fittings 126 shown in Figure 9 may be replaced by a manifold with one or more internal passages that span between adjacent battery cold plates of the battery pack. Additional embodiments, features, benefits, aspects, and variations of the battery pack 110 and its component parts, as well as related techniques and embodiments, are shown and described in U.S. Provisional Patent Application Numbers: 63/388,608; 63/388,609; 63/388,610; 63/388,612; 63/388,613; 63/388,615; 63/388,616; 63/388,618; and 63/388,619, each filed on July 12, 2022, and International Patent Application Numbers: PCT/US2023/027412; PCT/US2023/027415; PCT/US2023/027411; PCT/US2023/027414; and PCT/US2023/027417, each filed on July 11, 2023, the entire disclosures of all of which are incorporated by reference herein for all purposes.

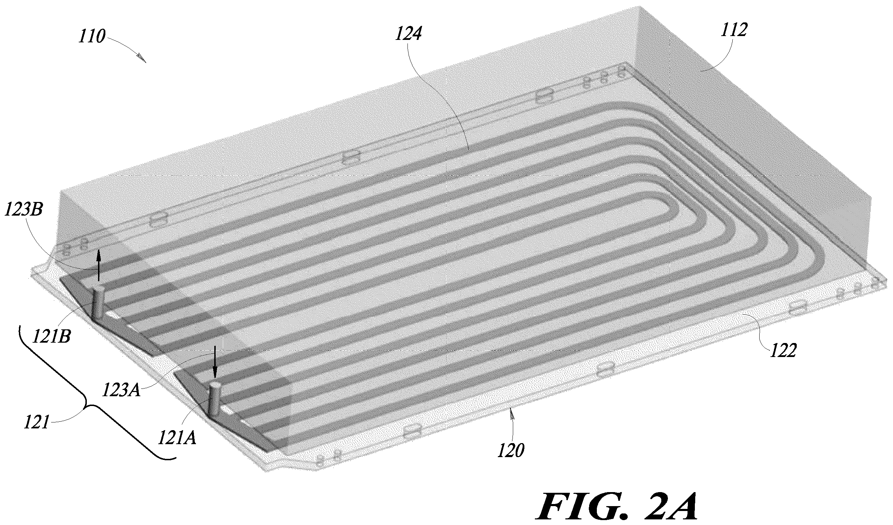

Turning now to Figure 2A with continuing reference to Figure 1, illustrated therein is a perspective view of a schematic battery module layer 112 and associated thermal management device 120 or battery pack cold plate 120 below the battery module layer 112. The battery module layer 112 is shown in schematic form and shaded transparent grey to avoid obscuring features of the thermal management device 120. The battery module layer 112 may also be associated with a thermal management device 120 above the layer 112 which is omitted for clarity. As described above, the thermal management device 120 may be an active heat exchanger or battery pack cold plate 120 with a planar manifold 122 and at least one heat transfer medium passageway 124 to facilitate the circulation of a heat transfer medium through the manifold 122 during operation to assist in drawing heat away from the battery cells 116 of the layer 112 to cool the battery cells 116 or, alternatively, supply heat to the battery cells 116 to heat the battery cells 116. The battery cold plate 120 may further include a set of heat exchange medium openings 121, such as at least inlet 121A and outlet 121B illustrated in Figure 2A.

The openings 121 are in communication with the fittings 126 illustrated in Figure 1 and/or another fluid coupling or heat exchange media source and serve as an inlet and outlet for the heat exchange medium, respectively. Heat exchange medium may be provided by the fittings 126 to the inlet 121A (as represented by arrow 123A), where it is distributed to the at least one passageway 124 for flow through the manifold 122 along the passageways 124 to the outlet 121B (as represented by arrow 123B). Thus, the inlet 121A, passageways 124, and outlet 121B may cooperate to define a fluid flow path through or across the cold plate 120. In some embodiments, the direction of flow is the opposite to that described above, namely, heat exchange medium is provided first to the opening 121B for flow through the passageways 124 to the opening 121A, and, in some instances, may be selectively changed during heating and/or cooling of the battery cells 116 during operation. The openings 121 may be on the same end (or side) or different ends (or different sides) of the cold plate 120 in some variations with "inlet" and "outlet" used not as limiting terms for the openings 121, but rather, as descriptive terms that help define the flow path for the heat exchange medium in various non-limiting examples.

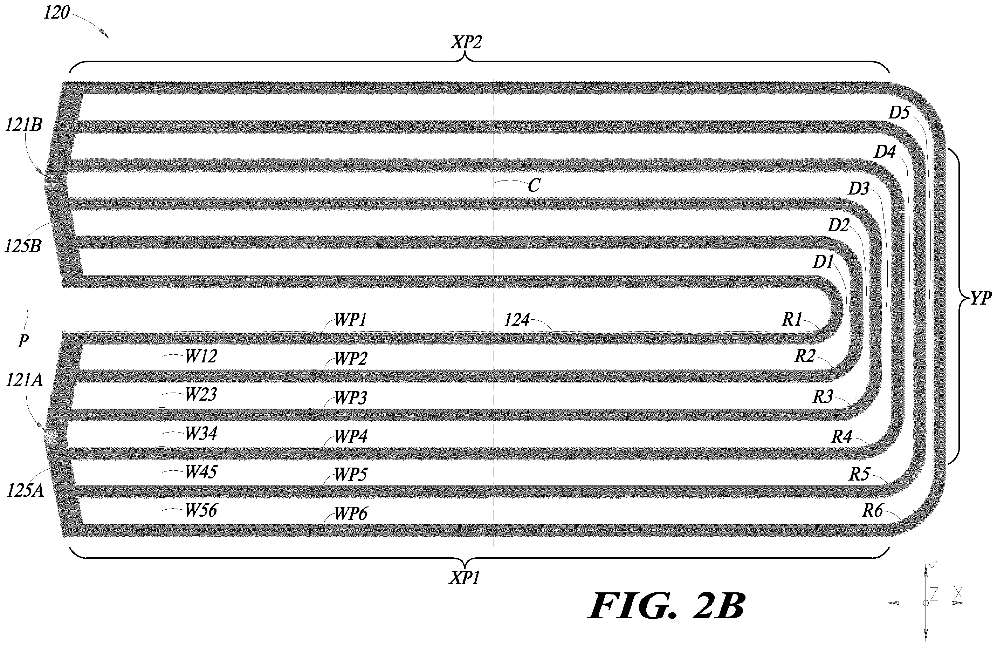

Figure 2B is a plan view of a non-limiting example of a layout or arrangement of the passageways 124 of the battery pack cold plate 120 with the manifold 122 omitted for clarity. In the illustrated embodiment of Figure 2B, the cold plate 120 includes a distribution channel 125A in communication with the inlet 121A and a collection channel 125B in communication with the outlet 121B. The distribution channel 125A receives heat exchange media from the inlet 121A and distributes the same to the passageways 124 at the beginning of the flow path. The collection channel 125B operates similarly, but collects heat exchange media from the passageways 124 at the end of the flow path and provides the collected media to the outlet 121B. Thus, the distribution and collection channels 125A, 125B may also be referred to as heat exchange media manifolds and/or heat exchange media bus bars.

In general, the number, arrangement or layout, and characteristics of the passageways 124 will have an impact on the heating and cooling capability of the cold plate 120 because such features of the passageways 124 change the pressure drop of the heat exchange media across the cold plate 120 and in turn the velocity of fluid therethrough. The pressure drop across the cold plate 120 is inversely related to fluid velocity across the cold plate 120, meaning that a large pressure drop results in a fluid that moves slowly through the cold plate because the loss of pressure across the cold plate 120 reduces the fluid velocity, and vice versa. The "pressure drop" across the cold plate 120 may refer to a difference between measured or detected fluid pressures at the inlet 121A and outlet 121B, respectively, or may refer to differences in average pressure across the cold plate 120 relative to a baseline embodiment. While a lower pressure drop may generally be preferred in order to ensure sufficient fluid velocity for heating or cooling across the plate 120, at least some pressure drop is desirable to allow for a longer interaction time or residence time for the heat exchange media and the battery cells 116. In other words, if the pressure drop is reduced to a minimum level, the heat exchange media may move through the plate 120 too quickly to effectively heat or cool the cells 116 because there is insufficient interaction or residence time for dissipation of heat or absorption of heat at the relatively higher fluid velocity of the heat exchange media. In addition, a large or high pressure drop may be disadvantageous because the pressure drop is preferably accounted for in the overall thermal management system, meaning that a higher pressure drop may necessitate a compressor or additional components in the thermal management system to increase pressure and/or replace the lost pressure across the plate to ensure sufficient fluid circulation. Because the battery pack 110 may include multiple battery module layers 112 and multiple cold plates 120, the pressure drop across each cold plate 120 is amplified throughout the entire multi-layer battery pack 110 and, as a result, the thermal management system may be overly complicated and expensive if it is designed to increase heat exchange media pressure to account for pressure drop in each layer or at each layer. In other words, increasing heat exchange media pressure for a cold plate 120 that is in the middle of the battery pack 110 is more difficult and utilizes a more complex and expensive thermal management system than regulating pressure only at an overall inlet and outlet of the battery pack 110.

In addition, the battery cells 116 and/or battery module layers 112 described herein may have a preferred operational temperature range for the chemical reactions carried out by the cells 116. If the cells 116 are too hot or too cold, the reactions may not be as effective, which reduces the overall efficiency of the battery pack 110. Thus, the overall deviation in temperature across the cold plate 120 is another factor to consider in the design of the cold plate 120 which is related to the aspects discussed above regarding characteristics of the passageways 124. Preferably, a cold plate 120 according to the techniques discussed herein will reduce a pressure drop across the plate 120 to a desirable level, while also minimizing temperature deviation across the cold plate 120. Reducing the temperature deviation may also be described as improving temperature uniformity across the cold plate 120 in an effort to reduce or eliminate localized hot and cold spots (or regions) across the plate 120 and provide a more consistent temperature profile across the plate 120 that is within a preferred operating temperature range of the cells 116 and/or the battery module layer 112. Accordingly, various aspects of the battery pack cold plate 120 are optimized herein to achieve the above aims, namely at least optimization of the pressure drop and/or temperature deviation or temperature uniformity across the cold plate 120, among other benefits.

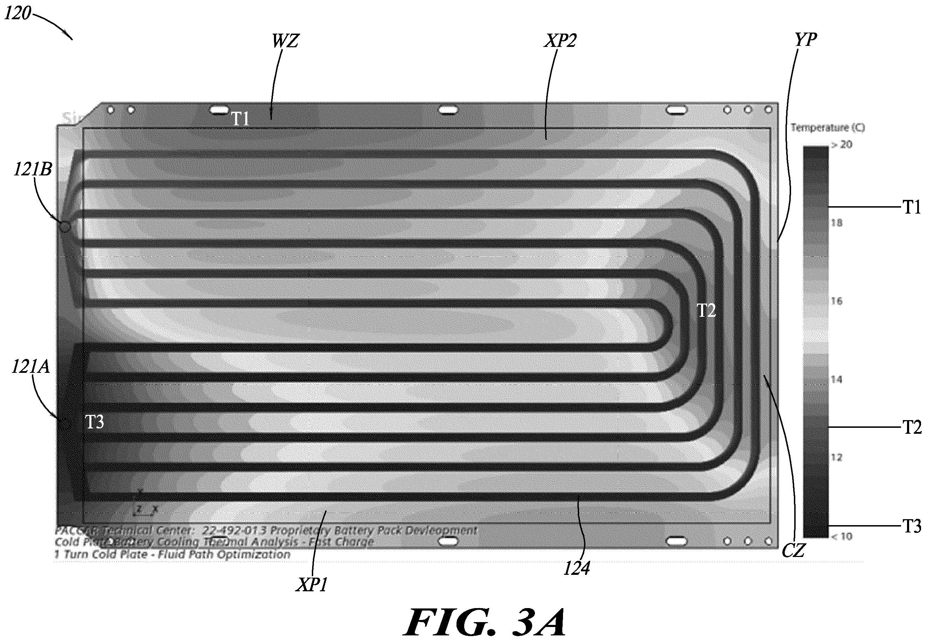

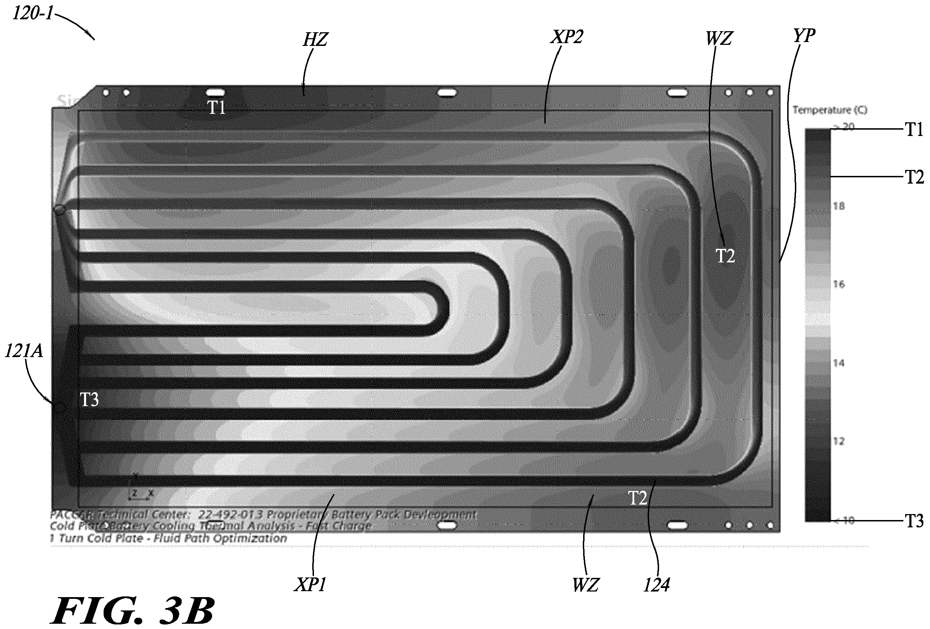

The battery pack cold plate 120 illustrated in Figure 2A and Figure 2B may be referred to as a "baseline" cold plate 120, meaning that the features of the cold plate 120 in Figure 2A and Figure 2B are the starting point for optimization. In some cases, this means that changing a feature of the cold plate 120, as discussed further below, is with reference to the baseline cold plate 120 in Figure 2A and Figure 2B. This could also mean that any improvements discussed below with reference to Figures 3B-3E may be with reference back to the "baseline" shown in Figure 2A, Figure 2B, and Figure 3A. Continuing with Figure 2B, and to assist with defining features of the cold plate 120, the cold plate 120 may generally lie in a X-Y plane shown in Figure 2B with the "X" direction being a horizontal or left and right direction and the "Y" direction between a vertical or up and down direction. The "Z" direction is into and out of the page, such as for the thickness of the cold plate 120 and/or the depth of the passageways 124 that is not visible in the plan view of Figure 2B. The "X" direction may also be referred to as a "longitudinal" or "length" direction because the cold plate 120 may preferably have a rectangular shape with a length or dimension that is greatest in this direction. The "Y" direction may be referred to as a "lateral," "transverse," or "width" direction that is perpendicular to the longitudinal direction.

The baseline cold plate 120 may have six distinct passageways 124. In further embodiments, the number of passageways 124 may generally be selected and may be more or less than six passageways, including one, two, three, four, five, seven, eight, or more passageways 124. Each of the passageways 124 may define a separate tortuous path across the cold plate 120. In other instances, the passageways 124 include one or more branches along a length thereof. In the illustrated embodiment of Figure 2B, the tortuous path of each passageway 124 includes at least two curves or turns to provide a generally "U"-shaped contour between the inlet 121A and the outlet 121B. In other words, each passageway 124 may extend from the inlet 121A on a first end (i.e., left end) of the cold plate 120, make a first turn proximate a second end (i.e., right end) of the cold plate 120, extend further across or along the second end of the cold plate 120, before turning again to return to the outlet 121B on the first end of the cold plate 120. For clarity, Figure 2B includes dashed line C through a center of the cold plate 120 to delineate the first end and the second end of the cold plate 120, with the area to the left of the line C being the first end and the area to the right of the line C being the second end according to the orientation of Figure 2B. Each of the curved portions of the passageways may generally be arranged in a successive and overlapping arrangement that is not perfectly concentric, but is overall similar to a concentric arrangement. Each passageway 124 may have similar or different passageway characteristics relative to the other passageways 124. Thus, each passageway 124 may preferably include at least a first longitudinal portion XP1 from the inlet 121A to the second end of the cold plate 120, a lateral portion YP at the second end of the cold plate 120, and a second longitudinal portion XP2 from the second end of the cold plate 120 to the outlet 121B with the portions XP1, YP, XP2 connected by curved or rounded portions. Each of the portions XP1, YP, XP2 may be straight and rectilinear in an embodiment and joined together by curved or rounded sections described elsewhere. As shown in Figure 2B, the passageways 124 may be symmetric about a longitudinal plane P (or longitudinal axis P) that bisects the battery cold plate into opposing and symmetric lateral regions on either sides of the plane P. In an embodiment in the orientation of Figure 2B, the longitudinal plane P is a horizontal plane through a center of the cold plate 120 and/or manifold 122 that includes the illustrated passageways 124.

While many other variations of the above arrangement of the passageways 124 are contemplated herein given that the layout or arrangement of the passageways 124 may generally be selected, the above non-limiting example layout will be described further to illustrate the techniques for optimizing the cold plate 120 according to the disclosure. Further, it is appreciated that while the arrangement of the passageways 124 may generally be selected and may vary, it is preferred that the cold plate 120 provide a high density of passageways 124 across an entire area of the plate 120, meaning that the passageways 124 are preferably arranged so that cooling and/or heating can be provided across the entire plate 120. Thus, designs with large gaps or empty spaces on the plate 120 are less preferred and may not be viable design candidates. Still further, and as will be described below, designs with too many turns or curves may result in a high pressure drop which, as described above, can reduce heating and/or cooling performance. Thus, while the disclosure contemplates other arrangements of the passageways 124, the general arrangement of the passageways 124 in a U shape as shown in Figure 2B, and as further optimized herein, is a particularly advantageous arrangement in view of the above design considerations. It is appreciated, however, that in embodiments wherein the inlet and outlet may be on opposite ends of the cold plate 120, the passageways 124 may be provided in an S shape (or some other shape) instead of a U shape.

Each passageway 124 has a respective width WP1, WP2....WPN in the lateral direction , a respective height in the Z direction, and a respective cross-sectional area, which may also be considered a "size" of the passageway 124. The passageways 124 are also spaced from each other in the lateral direction (i.e., the Y-axis direction) by a selected spacing distance or spacing width. The spacing width between outer surfaces of the first two passageways in the lateral direction is W12, the width between outer surfaces of the second and third passageways is W23 and so on. Each turn or curve along the passageways 124 may have a respective radius of curvature R1, R2, and so forth. To the extent that a passageway 124 has two or more distinct curves or turns separated by straight sections of passageway 124, as above, the radius of curvature of each curve or turn may preferably be the same, or they could be different. Given the U-shaped arrangement of the passageways 124 in a particularly advantageous embodiment and the features discussed above, the passageways 124 may in some cases be positioned closer together at the lateral portion YP on the second end of the plate 120 than the width or spacing W12, W23, etc. of the passageways 124 at the longitudinal portions XP1, XP2, as shown in Figure 2B. The distance between outer surfaces of the passageways 124 at the lateral portion YP, which may also be a second end portion, is designated D1 for the first and second passageways 124, D2 for the second and third passageways 124, and so forth. Further, each passageway 124 may have a different length than the other passageways 124 at the longitudinal and lateral portions XP1, XP2, YP with the outer passageways 124 generally having longer lengths relative to the inner passageways 124 to accommodate the successive or generally concentric arrangement of the curved portions of the passageways 124.

The spacing D1-D5 at the lateral portion YP (or second end) of the plate 120 is a further design consideration because the potentially different spacing relative to the longitudinal portions XP1, XP2 changes the density of the flow of heat exchange media in this area of the plate 120 relative to other areas, and thus the plate 120 may have different heating and cooling capabilities in this region. Moreover, changing the width, height, and/or cross-sectional area of the passageways 124 themselves (i.e., varying WP1, WP2, etc.) as well as the radii of any turns or curves R1, R2, etc. may affect pressure drop and fluid velocity, which further varies temperature distribution. The spacing between the passageways 124 at the longitudinal portions W12, W23, etc. may also impact temperature distribution in those areas because of the variance of energy density, much like the lateral portion YP described above. The above dimensions will be referred to throughout the disclosure to compare different designs of the cold plate 120 and optimization of the same.

In particular embodiments, the spacing W12, W23, etc. between the passageways 124 is preferably between 30 millimeters ("mm") and 50 mm and in Figure 2B, may be 43.5 mm between each passageway 124. The width WP1, WP2, etc. of the passageways 124 is preferably between 10 mm and 18 mm and in Figure 2B, may be 14 mm. The first radius R1 may be 30 mm and may be constant. The radius R2 is preferably between 35 mm and 55 mm, and in Figure 2B, may be 45 mm. The radius R3 is preferably between 55 mm and 75 mm, and in Figure 2B, may be 65 mm. The radius R4 is preferably between 54 mm and 65 mm, and in Figure 2B, may be 55 mm. The radius R5 is preferably between 50 mm and 70 mm, and in Figure 2B, may be 60 mm. The radius R6 is preferably between 60 mm and 80 mm, and in Figure 2B, may be 70 mm. The distances D1-D5 at the lateral portion YP are preferably between 20 mm and 100 mm and in Figure 2B may specifically be 25 mm. While the disclosure contemplates dimensions and values outside of the above ranges, in general, the above ranges are preferred parameters for the characteristics of a cold plate 120 according to the non-limiting examples provided herein. Thus, optimization of the cold plate 120 is within the above ranges or parameters again with the objective of minimizing pressure drop to a desirable level while also minimizing temperature standard deviation across the cold plate 120.

Six hundred iterations of the cold plate 120 were considered within the above parameters for a battery with a 1500-watt ("W") heat source and an initial battery temperature of 25 degrees Celsius ("C") along with 10 liters per minute ("L/min") of heat transfer media at a temperature of 10 degrees C provided to the inlet 121A. Based on these iterations, it was determined that pressure drop across the plate 120 is preferably between 2,968 Kilopascal ("kPa") and 5,369 kPa with the baseline cold plate 120 pressure drop being 4,133 kPa. The mid-section temperature standard deviation was preferably between 0.88 and 1.85 with the baseline cold plate 120 having a standard deviation of 1.04. The mid-section temperature range was preferably between 4.9 degrees C and 8.7 degrees C with the baseline cold plate 120 providing a 5.6 degrees C mid-section temperature. The battery maximum temperature was preferably between 25.8 degrees C and 29.8 degrees C with the baseline cold plate 120 providing a battery temperature of 26.5 degrees C. Finally, the average fluid velocity (i.e., average velocity section plane) was preferably between 0.29 meters per second ("m/s") to 0.46 m/s with the baseline cold plate providing an average velocity of 0.37 m/s. While the values from the baseline cold plate 120 of Figure 2A and Figure 2B are within the acceptable ranges, the same does not necessarily mean that the baseline cold plate 120 has an optimal arrangement of the passageways 124. Rather, an operational battery temperature of 26.5 degrees C may be slightly below a preferred battery operating temperature for optimal battery efficiency. Further, pressure drop across the baseline cold plate 120 was relatively high, and temperature standard deviation is preferably lower than was evidenced with the baseline cold plate 120.

Figures 3A-3E are heat maps of embodiments of battery pack cold plates that illustrate variations in temperature distribution across the cold plate as a result of variations in the arrangement and characteristics of the passageways 124. Each of the heat maps in Figures 3A-3E generally have the same temperature scale with a minimum temperature of less than 10 degrees C being represented in dark blue through a gradient up to a maximum temperature of greater than 20 degrees C represented in dark red. Accordingly, blue and green colors are cool regions of the cold plates, while yellow, orange, and red areas are warm areas of the cold plates. Although Figures 3A-3E may not have the dimensions discussed above, such as D1-D5, R1-R6, etc. labeled to avoid obscuring the heat maps, the dimensions will be discussed below with continuing reference to Figure 2B.

As a starting point, Figure 3A provides a heatmap for the baseline cold plate 120 discussed above, and assuming the battery and heat transfer media operational constants discussed above. As can be seen in Figure 3A, there is a cold region (i.e., region with a comparatively low temperature) proximate the inlet 121A, which is similar to many other cold plate designs because of the introduction of coolant at this location. However, the close spacing D1-D5 of the passageways 124 at the lateral portion YP results in a secondary cold zone CZ at the lateral or second end portion YP that may be too cool for optimal battery operation and efficiency. There is also a warmer zone WZ at the second longitudinal portion XP2 near the outlet 121B that may be too warm for optimal battery operation and efficiency. Accordingly, the deviation of the temperature across the baseline plate 120 is relatively high (i.e., several distinct zones of low and high temperatures) while the plate 120 also has a less advantageous cold region CZ at the lateral portion YP due to the close spacing and arrangement of the passageways 124 at this location of the plate 120.

Figure 3B is a heatmap of a further embodiment of a cold plate 120-1 in which D1-D5 are increased from the baseline value of 25 mm to 90 mm for each space D1, D2, etc. In other words, cold plate 120-1 has significantly higher spacing between the passageways 124 at the second end (or lateral portion YP) of the plate 120-1 relative to the baseline cold plate 120. In addition, the width WP1, WP2, etc. of the passageways 124 was increased relative to the baseline cold plate 120 in an effort to compensate for the dramatic increase in spacing for D1-D5. The radii R1, R2, etc. were increased slightly relative to the baseline due to the change in dimensions of the passageways 124 and the increase in the spacing D1-D5. The cold plate 120-1 experienced an increase in temperature standard deviation relative to the baseline cold plate 120 of 29%, which is reflected in the heat map of Figure 3B. In essence, the increase in temperature standard deviation resulted in multiple warm zones WZ and even a hot zone HZ where temperatures reach the maximum of the measurement scale across the various portions XP1, YP, XP2 of the plate 120-1. In addition, the pressure drop increase relative to the baseline cold plate 120 was 28%, which is less advantageous. Overall, Figure 3B is provided to illustrate that increasing the spacing D1-D5 too much can result in a cold plate 120-1 that has a high overall temperature as well as a larger than preferred pressure drop and temperature standard deviation. Accordingly, while the cold plate 120-1 of Figure 3B may be viable, it is a less preferred option.

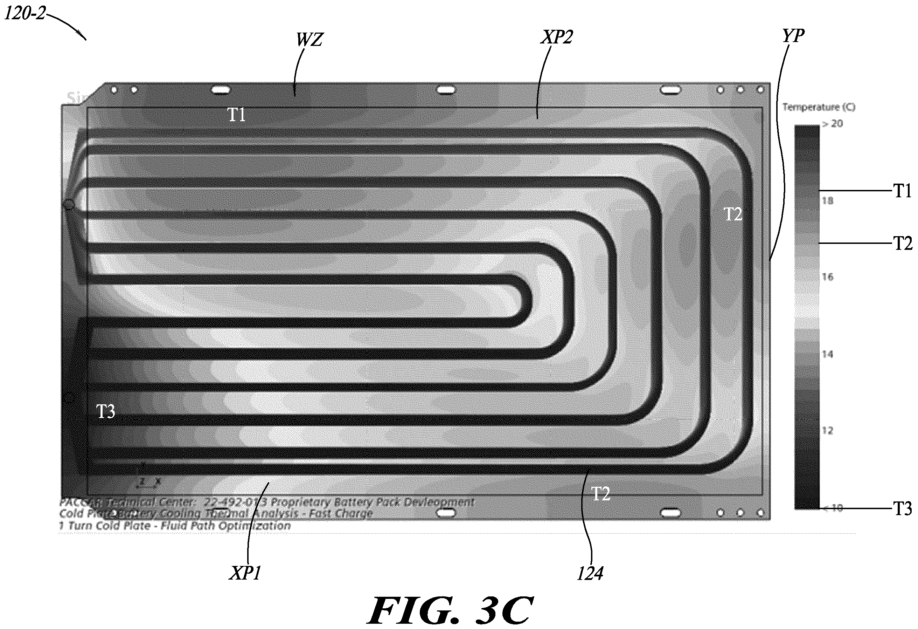

Figure 3C is a heatmap of a further embodiment of a cold plate 120-2 that is provided to illustrate that for a temperature distribution that is similar to the baseline cold plate 120, the pressure drop can be improved 20% relative to the baseline cold plate 120 by optimizing the passageways 124. Specifically, in Figure 3C, the spacing between the outer passageways (i.e., W56) may be reduced to provide two passageways in close proximity around the outer edge of the plate 120-2. Further, the spacing D1-D5 at the lateral portion YP was increased to 65 mm. The size or width WP1, WP2, etc. of the passageways 124 was also increased and, because of the difference in the spacing D1-D5, the radii R1, R2, etc. were also increased. In such an arrangement, there was only a 1% change in temperature standard deviation relative to the baseline 120, meaning the overall temperature variation across the plate 120 was similar to the baseline 120. However, pressure drop was improved 20% and, in looking at the heat map of Figure 3C, the cold plate 120-2 has a relatively consistent and warm temperature through the lateral portion YP whereas the baseline cold plate 120 has a noticeable cool zone CZ at the lateral portion YP. The consistent and somewhat warm temperature of Figure 3C at the lateral portion YP may be preferred to the cold zone CZ in the baseline cold plate 120 because the warm temperature may be more suitable for efficiency of the chemical reactions carried out by the battery module layer 112 and/or cells 116 on the cold plate 120-2.

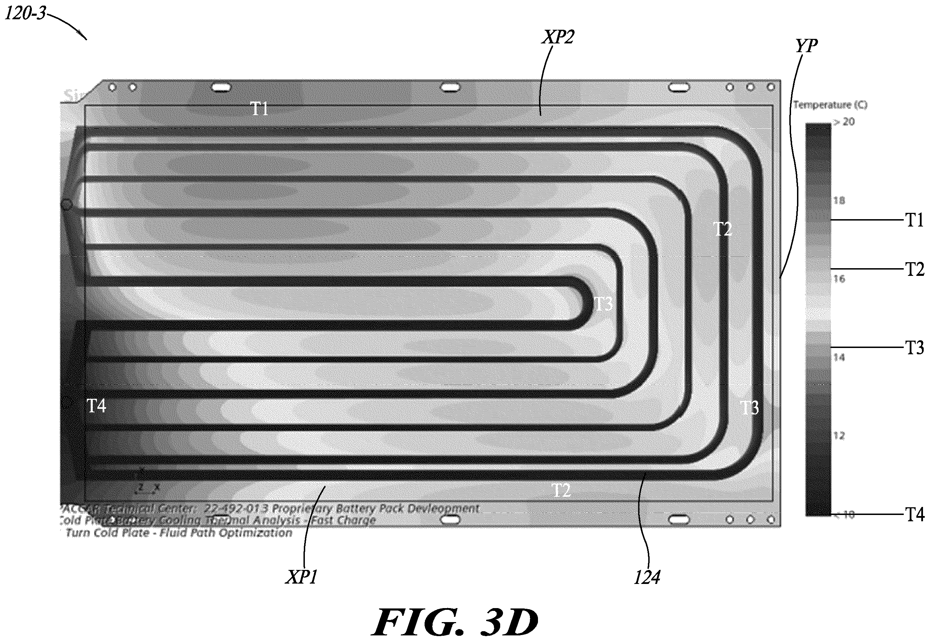

Figure 3D is a heatmap of a further embodiment of a cold plate 120-3 that is provided to illustrate that for a pressure drop that is similar to the baseline cold plate 120, the temperature distribution can be improved. In the cold plate 120-3, the size or width WP1, WP2, etc. of the passageways 124 is varied relative to the baseline cold plate 120. Specifically, at least an outermost and innermost passageway 124 may have a larger width WP1, WP6. Selected ones of the intervening passageways 124 may have different widths. For example, in Figure 3D, the passageways 124 may have an alternating pattern of variance in width with the second passageway 124 having a width WP2 that is less than the widths WP1, WP3 of the first and third passageways 124. Similarly, the fourth passageway 124 may have a width WP4 that is less than the widths WP3, WP5 of the third and fifth passageways 124. In an embodiment, the widths WP1-WP6 of the passageways 124 may also be an increasing or decreasing gradient over at least some of the series of passageways 124. As with the cold plate 120-2, the outermost passageways 124 may have a spacing W56 that is less than any of the other passageways 124 while the other passageways 124 generally maintain a constant spacing W12-W45. The distance D1-D5 at the lateral portion YP was also increased to 49 mm relative to the 25 mm spacing of the baseline cold plate 120.

As a result of the configuration of the cold plate 120-3, the difference in pressure drop was only 1% relative to the baseline cold plate 120, but the temperature deviation was substantially improved by 15%, which is reflected in comparing the heat maps of Figure 3D and Figure 3A. In Figure 3D, the cool zone CZ that is present at the lateral portion YP of the baseline cold plate 120 is somewhat alleviated due at least to the increase in the distance D1-D5 at the lateral portion YP. And, overall, the cold plate 120-3 has a more consistent warm temperature over the area of the plate 120-3 that is generally preferrable to the cold plate 120. However, the cold plate 120-3 exhibits some small cool areas near the lateral portion YP that may be a temperature that is less than a preferred operational temperature of the cold plate 120-3 and/or battery module layer 112 on the cold plate 120-3. Thus, while cold plate 120-3 is an improvement over the baseline cold plate 120 at least because of the improvement in temperature standard deviation and alleviation of some aspects of the cool zone CZ at the lateral portion YP, it may not be a preferred design because there are still isolated cool regions along the plate that may be less than a preferred operating temperature for the battery module layer 112 and/or battery pack 110.

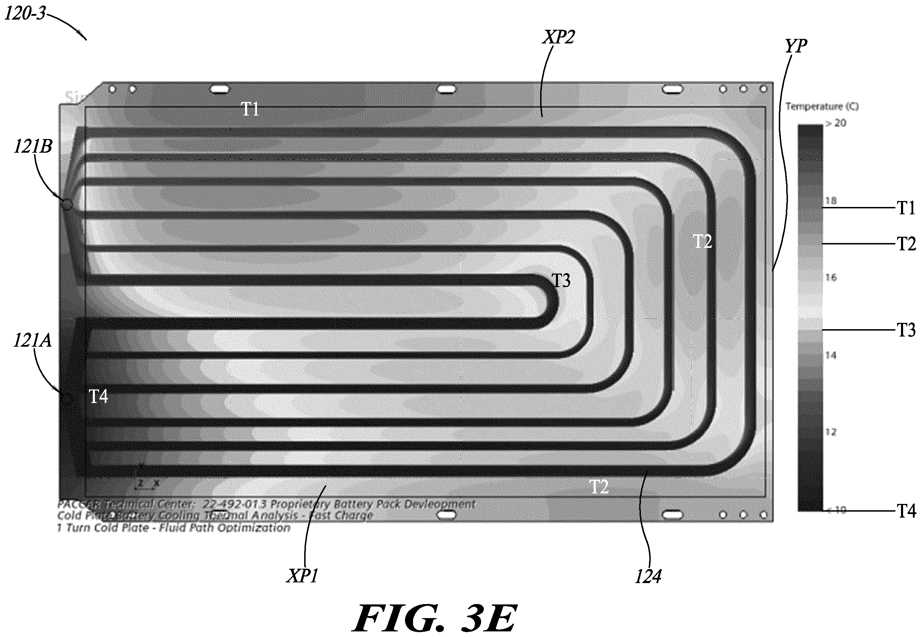

Figure 3E is a heatmap of a further embodiment of a cold plate 120-4 that is provided to illustrate that both pressure drop and temperature distribution can simultaneously be improved relative to the baseline cold plate 120. Because the cold plate 120-4 improves upon both pressure drop and temperature distribution (i.e., reduction in temperature standard deviation), the cold plate 120-4 may be a preferred embodiment. In the cold plate 120-4, the innermost and outermost passageways 124 have a width WP1, WP6 that is greater than the remaining passageways 124. In addition, the widths WP2-WP5 may increase from the innermost passageway 124 to the outermost passageway 124 and/or may be constant. In an embodiment, the widths WP1, WP6 are the largest while the width WP2 is the smallest of the passageways 124. The widths WP3, WP4, WP5 may be the same or similar and each greater than WP2 but less than WP1, WP6. The distance or spacing D1-D5 of the passageways 124 at the lateral portion YP was increased to 58 mm relative to the baseline distance D1-D5 of 25 mm. The increase in the distance or spacing D1-D5 may result in an increase in the radii R1-R6 of the turns of the passageways 124. Further, the three inner passageways 124 (i.e., closer to a center of the plate 120-4) may each have a spacing W12, W23, W34 that is generally similar and each greater than a spacing W45, W56 of the outer passageways 124 (i.e., further from center). The spacing W45, W56 of the outer passageways 124 may be the same or similar.

As a result of the particular configuration of the passageways 124 of the plate 120-4, both the pressure drop and temperature standard deviation across the plate 120-4 are improved. In particular, relative to the baseline cold plate 120, pressure drop was improved 9% while temperature standard deviation was improved 10%. At least the improvement in temperature standard deviation is shown by the heat map of Figure 3E, in which the cold plate 120-4 demonstrates a consistent warm temperature over a majority of the plate 120-4. The cool zone CZ at the lateral portion YP of the baseline cold plate 120 is eliminated and replaced by a consistent and preferable warm area at the lateral portion YP. The temperature is likewise warm and preferable along a majority of both longitudinal portions XP1, XP2 of the passageways 124. The plate 120-4 has cool and warm regions proximate the inlet 121A and the outlet 121B, but as described above, such regions may be difficult to design around due to the overall flow path and function of cold plates. In sum, the cold plate 120-4 is a preferred implementation or embodiment at least because of the improvement in pressure drop and temperature standard deviation relative to the baseline cold plate 120, which results in a cold plate design that enables a preferred operating temperature for efficiency and efficacy of the battery cells 116, battery module layer 112 and/or overall battery pack 110.

The above research and design iterations produced several important and previously unrecognized takeaways with respect to the optimization of the illustrated baseline cold plate 120. In particular, the distances or spacing D1-D5 at the lateral or second end portion YP of the plate (i.e., distances between passageways 124 at the end or far side of the plate 120) have a significant effect on temperature uniformity, meaning that varying said distances D1-D5 is an important factor in the overall optimization process. While conventional wisdom may suggest that D1-D5 be reduced or set to a small value to maintain an overall cooler battery pack 110, a cold plate with D1-D5 spacing that is too small, as in the baseline cold plate 120, may be too cool for optimal battery operating conditions. Conversely, if the distances D1-D5 are too large, such as in Figure 3B, the temperature uniformity of the plate is overall too warm. In a preferred embodiment, the distance or spacing D1-D5 is preferably between 50 mm and 60 mm including intervening and limit values, whereas the baseline cold plate distances D1-D5 were 25 mm. It is also noted that pressure drop and temperature standard deviation can be improved independently while maintaining the other factor or characteristic constant. For example, for the plate 120-2 shown in Figure 3C, the temperature distribution was the same or similar as the baseline cold plate 120, but pressure drop was improved 20%. Similarly, for the plate 120-3 in Figure 3D, the pressure drop was the same or similar to the baseline cold plate 120, but temperature standard deviation was improved 15%. By utilizing a design that combines advantages from the plates 120-2 and 120-3, it is also possible to improve pressure drop and temperature distribution simultaneously, as in plate 120-4 in Figure 3E to generate an overall preferred embodiment. Related methods of manufacture and operation to the techniques and embodiments discussed above are also contemplated.

In view of the above, characteristics of the channels or heat exchange media passageways across the cold plate are optimized to improve pressure drop and reduce temperature deviations across the cold plate and result in overall improved battery performance. The designs discussed herein somewhat surprisingly utilize a combination of characteristics of the passageways that is counter to conventional wisdom (i.e., unique spacing, passageway cross-sectional areas that vary, different radii of curved portions, etc.) to increase density of heat exchange media to produce a cold plate with preferred pressure drop and temperature uniformity that is relatively moderate across at least a majority of the plate. In other words, the designs discussed herein remediate hot and cold zones that are apparent in prior cold plate designs while also improving pressure drop to achieve advantages and reduce complexity in the overall thermal management system.

In an aspect, a battery cold plate includes: a manifold having an inlet, an outlet, and a plurality of passageways in the manifold that each define a tortuous flow path across the manifold between the inlet and the outlet, wherein a first passageway of the plurality of passageways has at least one passageway characteristic being different from at least one passageway characteristic of a remainder of the plurality of passageways to assist in reducing temperature deviations across the battery cold plate.

In an aspect, the at least one passageway characteristic of the first passageway is a width, a height, or a cross-sectional area of the first passageway that is greater than a width, a height or cross-sectional area of the remainder of the plurality of passageways.

In an aspect, the at least one passageway characteristic of the first passageway is a spacing between the first passageway and a second passageway that is greater than a spacing between adjacent pairs of the remainder of the plurality of passageways.

In an aspect, the at least one characteristic of the first passageway is a radius of curvature of a portion of the tortuous flow path of the first passageway that is greater than a radius of curvature of corresponding portions of the tortuous flow paths of the remainder of the plurality of passageways.

In an aspect, the inlet and the outlet of the manifold are both on a first end of the manifold, the manifold further including a second end opposite to the first end.

In an aspect, each of the plurality of passageways have a U shape extending from the inlet at the first end toward the second end of the manifold and along the second end of the manifold before returning from the second end of the manifold to the outlet at the first end of the manifold.

In an aspect, wherein each of the plurality of passageways has a first longitudinal portion extending from the first end toward the second end of the manifold, a lateral portion extending along the second end of the manifold, and a second longitudinal portion extending from the second end to the first end of the manifold, wherein the first longitudinal portion, the lateral portion, and the second longitudinal portion are connected by at least one curve.

In an aspect, the plurality of passageways have a spacing between successive passageways at the second end of the manifold that is between 50 mm and 60 mm.

In an aspect, the manifold further includes a distribution channel in fluid communication with the inlet and an upstream end of the plurality of passageways and a collection channel in fluid communication with a downstream end of the plurality of passageways and the outlet.

In an aspect, wherein the plurality of passageways are symmetric about a longitudinal plane that bisects the battery cold plate into opposing lateral regions.

In an aspect, wherein portions of the passageways within a central region of the battery cold plate between the first and second ends consist of linear passageway sections.

In an aspect, a battery cold plate includes: a manifold having a first end and a second end; and a plurality of passageways in the manifold that define a flow path across the first end and the second end of the manifold, wherein a first spacing between successive passageways of the plurality of passageways at the first end of the manifold is different from a second spacing between the successive passageways of the plurality of passageways at the second end of the manifold to assist in reducing temperature deviations across the battery cold plate.

In an aspect, the first spacing is greater than the second spacing.

In an aspect, the first spacing is less than the second spacing.

In an aspect, the second spacing is between 50 mm and 60 mm.

In an aspect, the first spacing is between 30 mm and 50 mm.

In an aspect, the first spacing is between 30 mm and 50 mm and the second spacing is between 50 mm and 60 mm.

In an aspect, each of the plurality of passageways is a U shape with straight portions interconnected by curved portions with each passageway of the plurality of passageways being spaced from other passageways of the plurality of passageways, and the curved portions have a radius of curvature between 30 mm and 80 mm.

In an aspect, each of the curved portions of one of the passageways has a different radius of curvature from the curved portions of the other passageways.

In an aspect, the manifold includes an inlet and an outlet both located on the first end of the manifold.

In an aspect, the manifold includes an inlet and an outlet located on opposite sides of the manifold.

In an aspect, a first passageway of the plurality of passageways has at least one passageway characteristic being different from at least one corresponding passageway characteristic of a remainder of the plurality of passageways.

In an aspect, the at least one passageway characteristic of the first passageway is a width, a height or a cross-sectional area of the first passageway that is greater than a width, a height or cross-sectional area of the remainder of the plurality of passageways.

In an aspect, the at least one passageway characteristic of the first passageway is a spacing between the first passageway and a second passageway that is greater than a spacing between adjacent pairs of the remainder of the plurality of passageways.

In an aspect, the at least one passageway characteristic of the first passageway is a radius of curvature of a portion of the flow path of the first passageway that is greater than a radius of curvature of corresponding portions of the flow paths of the remainder of the plurality of passageways.

In an aspect, the plurality of passageways are symmetric about a longitudinal plane that bisects the battery cold plate into opposing lateral regions.

In an aspect, portions of the passageways within a central region of the battery cold plate between the first and second ends consist of linear passageway sections.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. In addition, the articles "a," "an," and "the" as used in this application and the appended claims are to be construed to mean "one or more" or "at least one" unless specified otherwise.

Moreover, although aspects of the various embodiments have been described in the context of battery packs for commercial vehicles, such as long-haul tractors, it is appreciated that aspects of the embodiments of the battery packs and battery pack technology described herein, may be applicable to other applications, including, for example, personal vehicles and heavy duty industrial equipment.

The present application claims priority to U.S. Provisional Patent Application No. 63/620,105 filed on January 11, 2024, the entire contents of which are incorporated herein by reference.

In general, in the following claims, the terms used should not be construed to limit the claims to the specific embodiments disclosed in the specification and the claims, but should be construed to include all possible embodiments along with the full scope of equivalents to which such claims are entitled.

## Claims

1. A battery cold plate, comprising:
a manifold having an inlet, an outlet, and a plurality of passageways in the manifold that each define a tortuous flow path across the manifold between the inlet and the outlet,
wherein a first passageway of the plurality of passageways has at least one passageway characteristic being different from at least one passageway characteristic of a remainder of the plurality of passageways to assist in reducing temperature deviations across the battery cold plate.

2. The battery cold plate of claim 1, wherein the at least one passageway characteristic of the first passageway is a width, a height, or a cross-sectional area of the first passageway that is greater than a width, a height or cross-sectional area of the remainder of the plurality of passageways, or
wherein the at least one passageway characteristic of the first passageway is a spacing between the first passageway and a second passageway that is greater than a spacing between adjacent pairs of the remainder of the plurality of passageways, or
wherein the at least one characteristic of the first passageway is a radius of curvature of a portion of the tortuous flow path of the first passageway that is greater than a radius of curvature of corresponding portions of the tortuous flow paths of the remainder of the plurality of passageways.

3. The battery cold plate of one of the preceding claims, wherein the inlet and the outlet of the manifold are both on a first end of the manifold, the manifold further including a second end opposite to the first end.

4. The battery cold plate of claim 3, wherein each of the plurality of passageways have a U shape extending from the inlet at the first end toward the second end of the manifold and along the second end of the manifold before returning from the second end of the manifold to the outlet at the first end of the manifold, or
wherein each of the plurality of passageways has a first longitudinal portion extending from the first end toward the second end of the manifold, a lateral portion extending along the second end of the manifold, and a second longitudinal portion extending from the second end to the first end of the manifold, wherein the first longitudinal portion, the lateral portion, and the second longitudinal portion are connected by at least one curve, or
wherein the plurality of passageways have a spacing between successive passageways at the second end of the manifold that is between 50 mm and 60 mm.

5. The battery cold plate of one of the preceding claims, wherein the manifold further includes a distribution channel in fluid communication with the inlet and an upstream end of the plurality of passageways and a collection channel in fluid communication with a downstream end of the plurality of passageways and the outlet.

6. The battery cold plate of one of the preceding claims, wherein the plurality of passageways are symmetric about a longitudinal plane that bisects the battery cold plate into opposing lateral regions, or
wherein portions of the passageways within a central region of the battery cold plate between the first and second ends consist of linear passageway sections.

7. A battery cold plate, comprising:
a manifold having a first end and a second end; and
a plurality of passageways in the manifold that define a flow path across the first end and the second end of the manifold,
wherein a first spacing between successive passageways of the plurality of passageways at the first end of the manifold is different from a second spacing between the successive passageways of the plurality of passageways at the second end of the manifold to assist in reducing temperature deviations across the battery cold plate.

8. The battery cold plate of claim 7, wherein the first spacing is greater than the second spacing, or
wherein the first spacing is less than the second spacing.

9. The battery cold plate of claim 7 or claim 8, wherein the second spacing is between 50 mm and 60 mm, or
wherein the first spacing is between 30 mm and 50 mm, or
wherein the first spacing is between 30 mm and 50 mm and the second spacing is between 50 mm and 60 mm.

10. The battery cold plate of one of claims 7-9, wherein each of the plurality of passageways is a U shape with straight portions interconnected by curved portions with each passageway of the plurality of passageways being spaced from other passageways of the plurality of passageways, and the curved portions have a radius of curvature between 30 mm and 80 mm,
preferably wherein each of the curved portions of one of the passageways has a different radius of curvature from the curved portions of the other passageways.

11. The battery cold plate of one of claims 7-10, wherein the manifold includes an inlet and an outlet both located on the first end of the manifold, or
wherein the manifold includes an inlet and an outlet located on opposite sides of the manifold.

12. The battery cold plate of one of claims 7-11, wherein a first passageway of the plurality of passageways has at least one passageway characteristic being different from at least one corresponding passageway characteristic of a remainder of the plurality of passageways.

13. The battery cold plate of claim 12, wherein the at least one passageway characteristic of the first passageway is a width, a height or a cross-sectional area of the first passageway that is greater than a width, a height or cross-sectional area of the remainder of the plurality of passageways, or
wherein the at least one passageway characteristic of the first passageway is a spacing between the first passageway and a second passageway that is greater than a spacing between adjacent pairs of the remainder of the plurality of passageways, or
wherein the at least one passageway characteristic of the first passageway is a radius of curvature of a portion of the flow path of the first passageway that is greater than a radius of curvature of corresponding portions of the flow paths of the remainder of the plurality of passageways.

14. The battery cold plate of one of claims 7-13, wherein the plurality of passageways are symmetric about a longitudinal plane that bisects the battery cold plate into opposing lateral regions.

15. The battery cold plate of one of claims 7-14, wherein portions of the passageways within a central region of the battery cold plate between the first and second ends consist of linear passageway sections.
